# EUROPÄISCHE PATENTSCHRIFT

(11) **EP 0 450 408 B1**
(45) Veröffentlichungstag und Bekanntmachung des Hinweises auf die Patenterteilung: **16.08.1995**
(21) Anmeldenummer: 91104372.7
(22) Anmeldetag: 20.03.1991
(51) Int. Cl.: B27B 5/16

(54) **Sägeeinrichtung mit einer um 180o wendbar gelagerten Grundplatte**
Sawing device having a base plate able to pivot over 180 degrees
Dispositif de sciage ayant une plaque de base pivotable sur 180 degrés

(30) Priorität: 31.03.1990 DE 4010456; 10.05.1990 DE 9005300 U
(43) Veröffentlichungstag der Anmeldung: 09.10.1991
(73) Patentinhaber: Elektra Beckum Aktiengesellschaft, D-49716 Meppen (DE)
(72) Erfinder: Hempelmann, Gerd, W-4470 Meppen 1 (DE); Hempelmann, Jürgen, W-4470 Meppen 1 (DE)
(74) Vertreter: von Rohr, Hans Wilhelm, Dipl.-Phys.

(56) Entgegenhaltungen:
- EP-A- 0 058 775
- DE-A- 1 628 992
- DE-A- 1 920 062
- DE-U- 9 005 300
- FR-A- 2 511 924
- US-A- 2 496 716
- US-A- 3 827 325

## Beschreibung

Die Erfindung betrifft eine Sägeeinrichtung mit den Merkmalen des Oberbegriffes von Anspruch 1.

Die bekannte Sägeeinrichtung, von der die Erfindung ausgeht (EP-B 0 058 775), ist eine kombinierte Kapp-, Gehrungs- und Tischsäge mit einer in einem Traggestell um 180° wendbar gelagerten Grundplatte. In der einen Position befindet sich das Sägeaggregat oberhalb der Grundplatte, es handelt sich hier um die sogenannte Kappsägeposition. In der Kappsägeposition muß das Sägeaggregat bestimmungsgemäß aufwärts und abwärts geschwenkt werden können. In um 180° geschwenkter Stellung der Grundplatte befindet sich das Sägeaggregat unterhalb der Grundplatte. Es muß hier ganz nahe an die Grundplatte herangeschwenkt sein, da das Sägeblatt in dieser Tischsägeposition die Grundplatte nach oben hin durchsetzen muß. Gesägt wird auf der Werkstückauflagefläche auf der Oberseite der Grundplatte mit dem von unten her nach oben durchragenden Sägeblatt. Um das Sägeaggregat in der Tischsägeposition in einer bestimmten Höhe zu fixieren, ist die im Anspruch erwähnte Stützvorrichtung vorgesehen. Diese ist meist eine Gewindespindel oder ein Gewindeteleskop, so daß bei eingeklinkter Stützvorrichtung die Position des Sägeaggregates in der Höhe auch eingestellt werden kann. Dadurch kann dann die Schnitttiefe des Sägeblattes oberhalb der Grundplatte eingestellt werden.

Bei dem zuvor erläuterten, bekannten Stand der Technik befindet sich die Stützvorrichtung auf der vom Sägeaggregat abgewandten Seite des Schwenklagerblockes zwischen dem Anschlußpunkt am Sägeaggregat und einer vom Schwenklagerblock nach hinten abragenden Lagergabel. Für die Kappsägeposition wird die Gewindespindel, die hier die Stützvorrichtung bildet, einfach aus einer Lagerstelle herausgenommen und nach oben weggeklappt. Ggf. kann die Stützvorrichtung auch gänzlich abgenommen werden. In beiden Fällen kann es in der Praxis zu Problemen kommen, dergestalt nämlich, daß die Gewindespindel unbeabsichtigt verhakt oder, bei vollständig abgenommener Gewindespindel, verloren geht.

Im übrigen ist die zuvor erläuterte, bekannte Konstruktion auch noch deshalb nachteilig, weil die Gewindespindel in der Tischsägeposition im wesentlichen senkrecht zur Grundplatte verläuft und daher die Drehbewegung der Gewindespindel zum Zwecke der Höheneinstellung des Sägeaggregates handhabungstechnisch etwas schwierig zu bewerkstelligen ist.

Eine Sägeeinrichtung der zuvor erläuterten Art, jedoch ohne eine zweite Schwenkachse, also ohne die Ausgestaltung für Shifterschnitte, jedoch ebenfalls mit einer Gewindespindel als Stützvorrichtung, die dort direkt zwischen der wendbar gelagerten Grundplatte und dem Sägeaggregat angeordnet ist, ist im übrigen seit Jahrzehnten bekannt (DE-C 1 628 992). Beläßt man es bei dieser direkten Anordnung der Stützvorrichtung und rüstet diese Sägeeinrichtung aber gleichwohl mit einer zweiten Schwenkachse für Shifterschnitte aus, so verändern sich beim Schwenken um die zweite Schwenkachse die wirksamen Längen der Anbringung des Sägeaggregates an der Grundplatte einerseits und der Stützvorrichtung andererseits relativ zueinander. Von der senkrechten Mittelstellung ausgehend führt dadurch allein die seitliche Schwenkung des Sägeaggregates in Tischsägeposition dazu, daß das Sägeblatt in geneigter Stellung ein wenig abgesenkt ist, da die wirksame Länge der Stützvorrichtung durch die seitliche Schwenkung verringert worden ist (siehe z. B. US-A 2 851 068).

Die zuvor erläuterte Problematik, die als unlösbar angesehen worden ist, hat dann dazu geführt, daß man von einer direkten Lagerung der Stützvorrichtung an der Grundplatte bzw. an einem damit fest verbundenen Teil gänzlich abgegangen ist. Man hat vielmehr das bisher an der Grundplatte angebrachte Ende der Stützvorrichtung bei der eingangs erläuterten Sägeeinrichtung, von der die Erfindung ausgeht (EP-B 0 058 775) in den um die zweite Schwenkachse schwenkbaren Schwenklagerblock selbst verlagert. Es liegt auf der Hand, daß mit dieser relative Längenänderungen aufgrund der Schwenkung des Sägeaggregates um die zweite Schwenkachse nicht mehr auftreten können, da der Fußpunkt der Stützvorrichtung ja in gleicher Weise wie das Sägeaggregat mit um die zweite Schwenkachse (und eben nicht um eine andere, davon beabstandete Schwenkachse) geschwenkt wird.

Der Erfindung liegt die Aufgabe zugrunde, die eingangs erläuterte, bekannte Sägeeinrichtung so auszugestalten und weiterzubilden, daß hinsichtlieh der Stützvorrichtung eine wesentlich verbesserte Konstruktion vorliegt.

Die zuvor aufgezeigte Aufgabe ist durch die Merkmale des kennzeichnenden Teils von Anspruch 1 gelöst.

Mit der erfindungsgemäßen Konstruktion befindet sich die Stutzvorrichtung, insbesondere die Gewindespindel, stets an beiden Enden in Verbindung mit dem jeweiligen lagernden Element. Dabei ist erkannt worden, daß die Schwenkbeweglichkeit des Sägeaggregates, die in Kappsägeposition erforderlich ist, bei der üblicherweise verwirklichten Drehbarbeit der Lagerung an den beiden Enden der Stützvorrichtung lediglich eine Längsverschiebbarkeit an einem Ende erfordert. Von dieser Erkenntnis ausgehend ist dann für die Kappsägeposition die Längsverschiebbarkeit im Anschlußblock vorgesehen worden, der dann in der Tischsägeposition die Arretierung der Stützvorrichtung im Anschlußblock entspricht. Die Stützvorrichtung, insbesondere als eine Gewindespindel, kann so weder ungewollt und unkontrolliert in eine Blockierstellung geraten, noch kann sie verloren gehen. Es ist lediglich darauf zu achten, daß die Arretierung im Anschlußblock nicht ohne weiteres einzurasten vermag. Dafür gibt es aber eine Reihe von technischen Möglichkeiten.

Weiter bevorzugte Ausgestaltungen sind Gegenstand der Ansprüche 2 bis 7.

Eine weitere bevorzugte Ausgestaltung der vorliegenden Erfindung für eine auch in Gehrungssägeposition einstellbare Sägeeinrichtung ist Gegenstand der Ansprüche 8 bis 10. Die dort beschriebene Ausrichtung der Stützvorrichtung, insbesondere also der Gewindespindel, führt dazu, daß sich die Gewindespindel in dem gleichen Maße "aufrichtet", in dem das Sägeaggregat um die zweite Schwenkachse aus der senkrechten Mittelebene herausgeschwenkt wird. Die sich "aufrichtende" Stützvorrichtung verlängert ihre wirksame Länge gerade in dem Maße, in dem sie durch die seitliche Schwenkung des Sägeaggregates wiederum auch verkürzt wird. Zwei gegenläufige Effekte kompensieren hier einander also weitgehend, wenn auch natürlich nicht absolut vollständig. Diese Kompensation reicht jedenfalls aus, um in der Praxis eine ausreichende Präzision der beanspruchten Sägeeinrichtung zu erreichen, also zu erreichen, daß die durch relative Längenänderungen verursachten Lageänderungen des Sägeblattes in Tischsägeposition praktisch nicht mehr störend ins Gewicht fallen.

Eine weiter bevorzugte Ausgestaltung der zuvor erläuterten Lehre findet sich schließlich in Anspruch 11.

Im folgenden wird die Erfindung anhand einer lediglich Ausführungsbeispiele darstellenden Zeichnung näher erläutert. In der Zeichnung zeigt
- Fig. 1: in einer perspektivischen Darstellung eine Sägeeinrichtung der erfindungsgemäßen Art,
- Fig. 2: in einer Draufsicht, schematisch, die Lagerung des Sägeaggregates der Sägeeinrichtung aus Fig. 1,
- Fig. 3: in Fig. 2 entsprechender Darstellung ein abgewandeltes Ausführungsbeispiel einer solchen Sägeeinrichtung,
- Fig. 4: die Stützvorrichtung der Sägeeinrichtung aus den Fig. 2 und 3 in vergrößerter Darstellung, teilweise geschnitten, und
- Fig. 5: in einer stark schematisierten Ansicht von der Rückseite aus und in Tischsägeposition ein weiteres Ausführungsbeispiel einer Sägeeinrichtung gemäß Fig. 1.

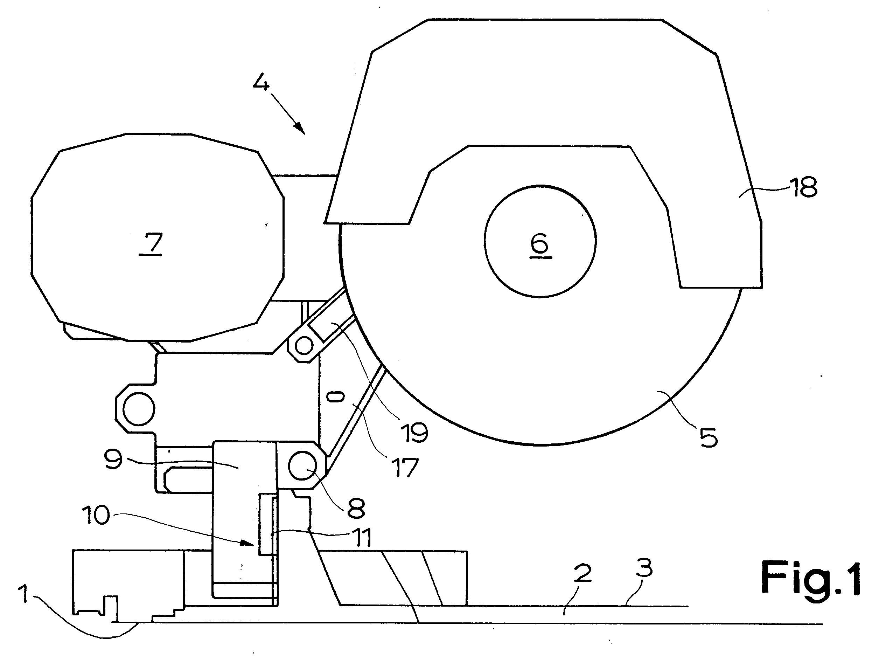

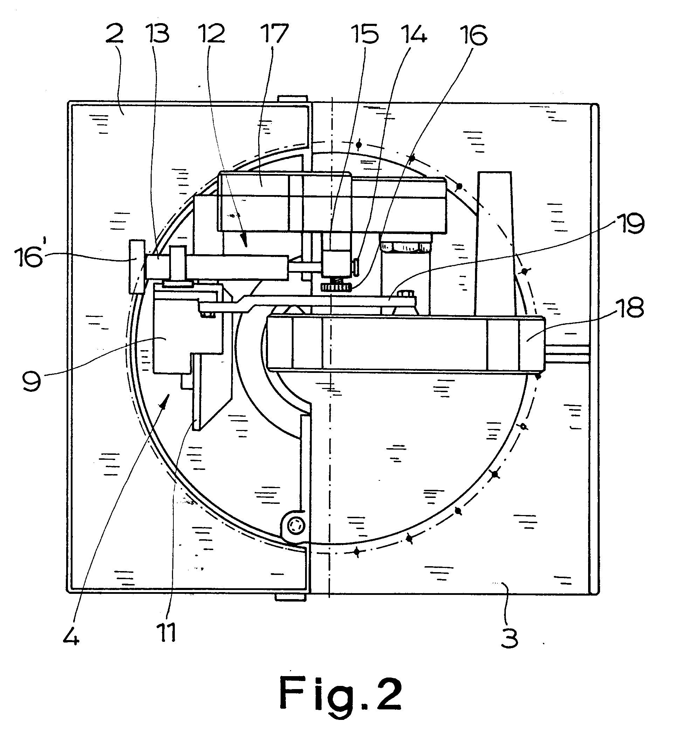

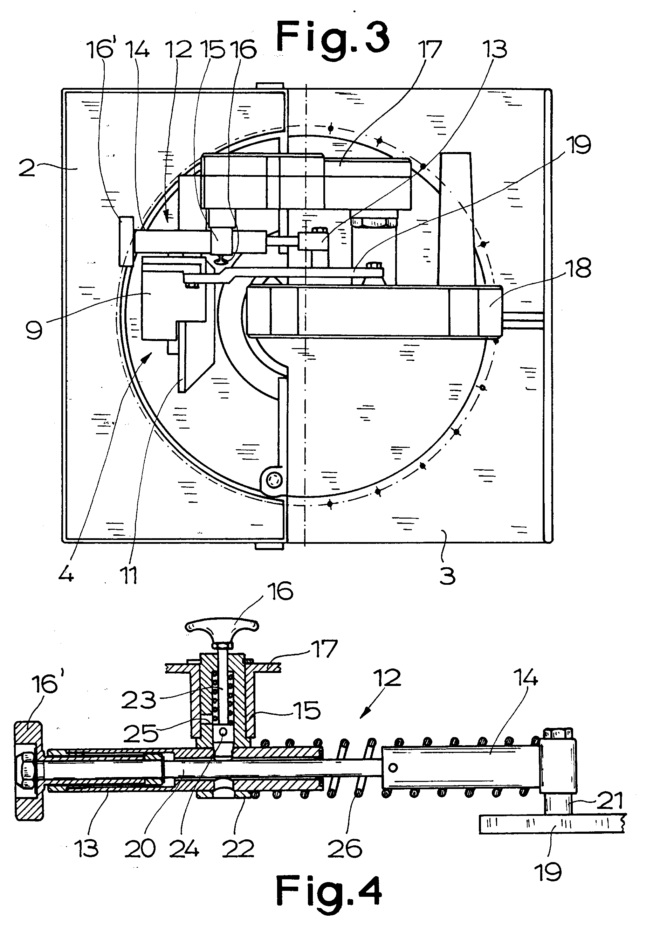

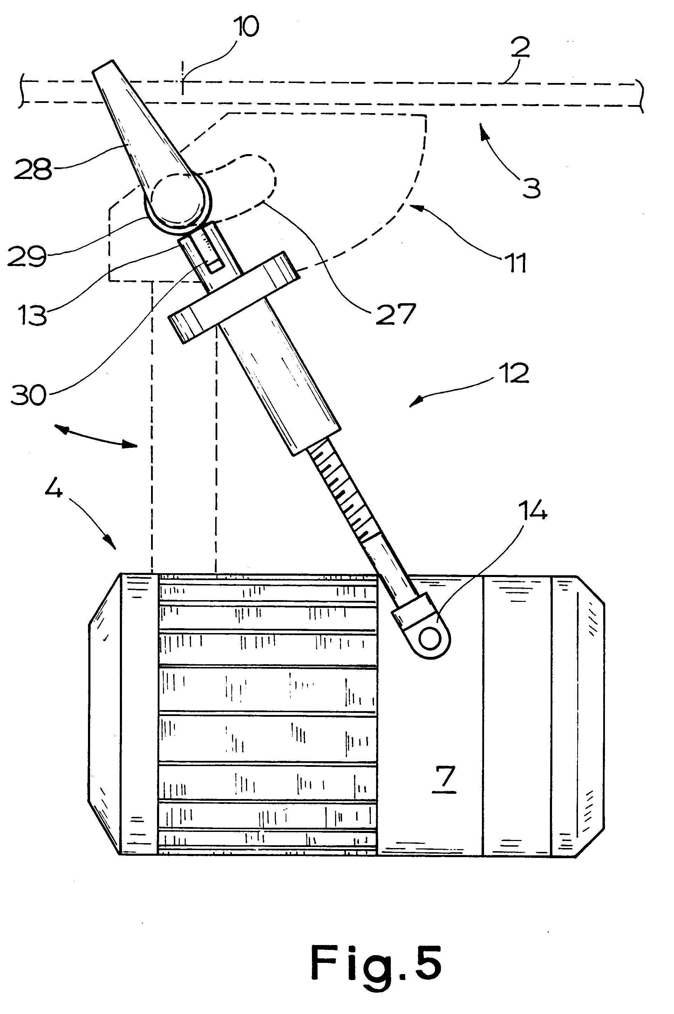

Die in Fig. 1 in einer Seitenansicht schematisch dargestellte Sägeeinrichtung weist zunächst ein Traggestell 1 auf, in dem eine Grundplatte 2 um 180 ° wendbar gelagert ist. Die Grundplatte 2 hat auf beiden Seiten jeweils eine Werkstückauflagefläche 3, nämlich auf einer Seite für eine Kapp- und Gehrungssägefunktion, wie in Fig. 1 dargestellt, und auf der anderen Seite für eine Tischsägefunktion. Auf einer Seite ist an der Grundplatte 2 ein Sägeaggregat 4 angebracht. Das Sägeaggregat 4 weist ein Sägeblatt 5 auf, das auf einer Welle 6 gelagert ist und von einem Antriebsmotor 7 zum Sägen angetrieben wird. Das Sägeaggregat 4 kann zunächst gegenüber der Grundplatte 2 um eine parallel zur Welle 6 des Sägeblattes 5 verlaufende erste Schwenkachse 8 geschwenkt werden. Die Schwenkachse 8 ist Teil eines Schwenklagerblockes 9. Der Schwenklagerblock 9 seinerseits ist um eine zur ersten Schwenkachse 8 senkrechte, parallel zur Werkstückauflagefläche 3 verlaufende zweite Schwenkachse 10 schwenkbar. Die zweite Schwenkachse 10 ist im dargestellten Ausführungsbeispiel nicht körperlich vorhanden, sondern ist lediglich virtuell als Zentrum einer Kulissenführung 11 vorhanden. Das Sägeaggregat 4 ist in der Kappsägeposition zwischen einer von der Grundplatte 2 entfernten Rhestellung und einer der Grundplatte 2 nahen Sägestellung auf und ab schwenkbar. Die Kappsägeposition ist in Fig. 1 dargestellt. In der bei gegenüber der Kappsägeposition gewendeter Grundplatte 2 einstellbaren Tischsägeposition durchdringt das Sägeblatt 5 die Grundplatte 2 von unten her, das Sägeaggregat 4 befindet sich unter der Grundplatte 2. Fig. 2 und 3 zeigen die Kappsägeposition, Fig. 5 die Tischsägeposition.

In den Figuren erkennt man eine Stützvorrichtung 12. Diese ist, wie an sich bekannt, als Gewindespindel bzw. hier genauer gesagt als Gewindeteleskop ausgeführt. Das Sägeaggregat 4 kann durch die Stützvorrichtung 12 in Tischsägeposition in der Sägestellung, also mit nach oben durch die Grundplatte 2 hindurchragendem Sägeblatt 5 gehalten werden. In der in Fig. 1 bis 3 dargestellten Kappsägeposition ist die Stützvorrichtung 12 allerdings unwirksam. Die Stützvorrichtung 12 ist in Fig. 5 einenends an der Grundplatte 2 gelagert bzw. an einem damit fest verbundenen Teil. In den Fig. 2 und 3 hingegen ist die Stützvorrichtung 12 einenends an der Schwenklagerung 9 gelagert.

Im Stand der Technik befindet sich die Stützvorrichtung 12 auf der vom Sägeaggregat 4 abgewandten Seite des Schwenklagerblockes 9, die auch dort vorgesehene Gewindespindel bzw. das auch dort vorgesehene Gewindeteleskop verläuft im wesentlichen senkrecht zur Werkstückauflagefläche 3.

In dem dargestellten, erfindungsgemäßen Ausführungsbeispiel gilt nun hingegen, daß die Stützvorrichtung 12 an einem Ende in Längsrichtung fest angebracht ist und daß das andere Ende 14 der Stützvorrichtung 12 in einem Anschlußblock 15 längsverschiebbar, aber in einer bestimmten Verschiebestellung arretierbar, gelagert ist. Wesentlich ist also, daß die Stützvorrichtung 12 in jeder Stellung im wesentlichen an beiden Enden 13, 14 mit dem jeweiligen lagernden Element verbunden ist. Sie führt also auch in der Kappsägeposition beim Auf- und Abschwenken des Sägeaggregats 4 keine unkontrollierten Bewegungen aus, sondern gleitet nur mit dem entsprechenden Ende 14 im Anschlußblock 15. Für die Tischsägeposition wird das Sägeaggregat 4 in die entsprechende Sägestellung gebracht und die Stützvorrichtung 12 wird in dem Anschlußblock 5 arretiert. Dabei läßt sich nun die Höhe des Sägeaggregates 4, also die wirksame Schnitthöhe des Sägeblattes 5 durch die Stützvorrichtung 12 einstellen.

Fig. 4 macht deutlich, daß der Anschlußblock 15 als Gleitführung mit quer angeordneter Federraste 16 oder Schraubraste ausgeführt ist. Im hier dargestellten Ausführungsbeispiel erkennt man sehr gut die Federraste 16, zu der weiter unten noch nähere Details ausgeführt werden.

Aus Fig. 2 und Fig. 3 läßt sich erkennen, daß ein Ende 14 der Stützvorrichtung 12, insbesondere mit dem Anschlußblock 15, im Inneren des Sägeaggregates 4, nahe der Welle 6 des Sägeblattes 5, angeordnet ist und daß sich die Stützvorrichtung 12 von dort aus schräg nach hinten oder auch im wesentlichen horizontal über den Schwenklagerblock 9 hinaus erstreckt und am nach hinten über den Schwenklagerblock 9 hinausragenden Ende 13 eine Betätigungshandhabe 16', insbesondere ein Drehknauf der Gewindespindel, angeordnet ist.

Während in Fig. 2 die Stützvorrichtung 12 zwischen dem Sägeaggregat 4 selbst und dem Schwenklagerblock 9 angeordnet ist, ist in Fig. 3 noch etwas besonderes zu erkennen. Für alle Figuren gilt dabei zunächst, daß das Sägeaggregat 4 zusätzlich zu einem das Sägeblatt 5 tragenden Schwenkarm 17 noch einen weiteren, an einer Schutzhaube 18 für das Sägeblatt 5 angreifenden Hilfsschwenkarm 19 aufweist. Eine derartige Parallelogrammlagerung ist an sich für Sägeeinrichtungen der in Rede stehenden oder einer ähnlichen Art bekannt. Diese Parallelogrammkonstruktion wird hier in besonderem Maße genutzt, nämlich bei dem Ausführungsbeispiel gemäß Fig. 3 dadurch, daß die Stützvorrichtung 12 zwischen dem Schwenkarm 17 und dem Hilfslagerarm 19 angeordnet ist. Sie könnte auch zwischen dem Hilfsschwenkarm 19 und dem Schwenklagerblock 9 angeordnet sein oder in ähnlich wirkender Anordnung, wie an sich aus dem Stand der Technik bekannt (DE-C 1 628 992). Im hier dargestellten Ausführungsbeispiel ist der Anschlußblock 15 am Schwenkarm 17 angeordnet, er könnte sich aber, wie gesagt, auch direkt an dem Schwenklagerblock 9 befinden. Die dargestellte Konstruktion-trägt dazu bei, daß sich die Stützvorrichtung 12 am Sägeaggregat 4 in einer besonders günstigen Lage befindet. Die Betätigungshandhabe 16' ragt nämlich im wesentlichen frei nach hinten vom Sägeaggregat 4 ab, sie kann leicht erfaßt und gedreht werden, wie das für die Höheneinstellung des Sägeaggregates 4 in Tischsägeposition auch erforderlich ist.

Von besonderem Vorteil ist bei dieser Anordnung, daß auch ein Arretierknebel für die Schwenklagerung des Schwenklagerblockes 9 selbst zumeist an der gleichen Stelle bzw. in unmittelbarer Nähe zu finden ist. Die Elemente zur Höheneinstellung und zur seitlichen Neigungseinstellung des Sägeaggregates 4 befinden sich konstruktiv also nahe beieinander. Bedienungstechnisch ist das von großem Vorteil.

Zu Fig. 4 ist im Detail noch zu erläutern, daß die dort deutlich dargestellte Stützvorrichtung 12 in Form eines Gewindeteleskops ausgeführt ist. Man erkennt die als Drehknauf der Gewindespindel konstruierte Betätigungshandhabe 16', die über einen Gewindeschaft 20 mit dem Lager 21 am Hilfsschwenkarm 19 gekuppelt ist. Der Anschlußblock 15 trägt eine seitliche Gleitführung 22, in der hier die Federraste mit einem eigenen Betätigungsknauf 23 gleitend gelagert ist. Die Federraste 16 ist im dargestellten Ausführungsbeispiel mit einem seitlichen Zapfen 24 versehen, der in eine Zapfenaufnahme 25 einführbar ist, wenn man den Betätigungsknauf 23 um 90° dreht. Dadurch wird die Federraste 16 in ihrer ausgerasteten Position arretiert. Dann kann die Stützvorrichtung 12 in dem Anschlußblock 15 längsverschoben werden. Im übrigen ist noch eine Druckfeder 26 vorgesehen, die die Stützvorrichtung 12 immer in die längstmögliche Position zu drücken versucht, so daß eindeutige Ausgangsverhältnisse gegeben sind.

Im in Fig. 5 dargestellten Ausführungsbeispiel ist die Stützvorrichtung 12 an ihrem einen Ende 13 in Längsrichtung fest und unverlierbar angebracht. Das andere Ende 14 der Stützvorrichtung 12 ist am Antriebsmotor 7 abnehmbar angebracht. Grundsätzlich wäre es möglich, auch hier das Ende 14 der Stützvorrichtung 12 in einem Anschlußblock 15 längsverschiebbar, aber in einer bestimmten Verschiebestellung arrierbar, zu lagern.

Fig. 5 läßt weiter sehr gut erkennen, wie hier mit Abstand von der zweiten Schwen achse 10 mit der Grundplatte 2 lagefest verbunden eine ein teilkreisbogenförmiges Langloch 27 in dem Schwenklagerblock 9, der hier lediglich gestrichelt angedeutet ist, durchsetzende Feststellspindel 28, indentifiziert durch ihren entsprechenden Kippspannhebel, angebracht ist, die zur Arretierung des Sägeaggregates 4 in beliebigen Neigungsstellungen dient. Auch das ist aus dem Stand der Technik bekannt.

Für diese Konstruktion ist nun wesentlich, daß die Stützvorrichtung 12, hier also die dargestellte Gewinde-Teleskopspindel, in der in Fig. 5 dargestellten Tischsägeposition bei nicht seitlich geneigtem Sägeaggregat 4, wie dargestellt, von der Grundplatte 2 aus zum Sägeaggregat 4 zur einen Seite hin abfallend verläuft. Damit ist der in der Beschreibungseinleitung zu dieser Alternative erörterte "Aufrichteffekt" verbunden.

Im in Fig. 5 dargestellten Ausführungsbeispiel gilt im übrigen, daß der Neigungswinkel der Stützvorrichtung 12 etwa maximal 30° beträgt, was auf den maximalen Neigungswinkel des Sägeaggregats 4 von ca. 45° abgestimmt ist. Dadurch ergeben sich im Mittel die geringsten Lageabweichungen des Sägeblattes 5 in Tischsägeposition.

Fig. 5 läßt im übrigen gut erkennen, daß hier das feste Ende 13 der Stützvorrichtung 12, nicht etwa in der Ebene der Werkstückauflagefläche 3 an der Grundplatte 2 angebracht ist, sondern mit Abstand von der Werkstückauflagefläche 3, nämlich in Höhe der Feststellspindel 28. Das ist konstruktiv zweckmäßiger, da sonst die Stützvorrichtung 12 an der Feststellspindel 28 bzw. deren Kippspannhebel auch noch vorbeigeführt werden müßte, was etwas kompliziertere Konstruktionen der Stützvorrichtung 12 erfordern würde. Im Grundsatz gilt aber, daß in an sich bekannter Weise auch beispielsweise eine allseits kippbewegliche Kugellagerung an der Grundplatte 2 zweckmäßig ist.

Im dargestellten Ausführungsbeispiel gilt nun, daß zur Lagerung des Endes 13 der Stützvorrichtung 12 auf der Feststellspindel 28 eine Lagerhülse 29 angebracht ist, an der das Ende 13 der Stützvorrichtung 12 an einer speziellen Lasche 30 angelenkt ist.

## Patentansprüche

1. Sägeeinrichtung mit einem Traggestell (1),
mit einer im Traggestell (1) um 180° wendbar gelagerten, auf beiden Seiten Werkstückauflageflächen (3) aufweisenden Grundplatte (2),
mit einem auf einer Seite an der Grundplatte (2) angeordneten, ein Sägeblatt (5) aufweisenden Sägeaggregat (4) und
mit einer Stützvorrichtung (12), insbesondere einer Gewindespindel oder einem Gewindeteleskop,
wobei die Grundplatte (2) in einer Kappsägeposition einerseits und in einer gegenüber der Kappsägeposition um 180° gewendeten Tischsägeposition andererseits einstellbar ist,
wobei das Sägeaggregat (4) gegenüber der Grundplatte (2) um eine parallel zu einer Welle (6) des Sägeblattes (5) verlaufende Schwenkachse (8) schwenkbar ist, wobei vorzugsweise die Schwenkachse (8) Teil eines Schwenklagerblockes (9) ist,
wobei das Sägeaggregat (4) in der Kappsägeposition zwischen einer von der Grundplatte (2) entfernten Ruhestellung und einer der Grundplatte (2) nahen Sägestellung hin- und herschwenkbar ist
wobei das Sägeaggregat (4) in der Tischsägeposition an die Grundplatte (1) herangeschwenkt ist und mit dem Sägeblatt (5) die Grundplatte (1) durchdringt,
wobei die Stützvorrichtung (12) das Sägeaggregat (4) in der Tischsägeposition in der Sägestellung hält, jedoch in der Kappsägeposition unwirksam ist und
wobei die Stützvorrichtung (12) an einem Ende (13) nicht lösbar und in Längsrichtung fest angebracht ist,
**dadurch gekennzeichnet,**
daß die Stützvorrichtung (12) auch an dem anderen Ende (14) nicht lösbar angebracht ist und
daß das andere Ende (14) der Stützvorrichtung (12) in einem Anschlußblock (15) längsverschiebbar, aber in einer beliebigen Verschiebestellung arretierbar gelagert ist.

2. Sägeeinrichtung nach Anspruch 1, dadurch gekennzeichnet, daß der Anschlußblock (15) als Gleitführung mit quer angeordneter Federraste (16) oder Schraubraste ausgeführt ist.

3. Sägeeinrichtung nach Anspruch 1 oder 2, dadurch gekennzeichnet,
daß das Ende (14) der Stützvorrichtung (12) im Inneren des Sägeaggregates (4) in der Nahe der Welle (6) des Sägeblattes (5) angeordnet ist,
daß die Stützvorrichtung (12) von dort ausgehend in Richtung des Schwenklagerblockes (9) verläuft und sich mit ihrem Ende (13) über den Schwenklagerblock (9) hinaus erstreckt und
daß am Ende (13) eine Betätigungshandhabe (16'), insbesondere ein Drehknauf der Gewindespindel, angeordnet ist.

4. Sägeeinrichtung nach einem der Ansprüche 1 bis 3, dadurch gekennzeichnet, daß der Anschlußblock (15) an dem Schwenklagerblock (9) angeordnet ist.

5. Sägeeinrichtung nach einem der Ansprüche 1 bis 4, dadurch gekennzeichnet, daß die Stützvorrichtung (12) an einem Ende an der Grundplatte (2) gelagert ist.

6. Sägeeinrichtung nach einem der Ansprüche 1 bis 4, dadurch gekennzeichnet, daß die Stützvorrichtung (12) an einem Ende an dem Schwerklagerblock (9) gelagert ist.

7. Sägeeinrichtung nach einem der Ansprüche 1 bis 4, dadurch gekennzeichnet,
daß das Sägeaggregat (4) zusätzlich zu einem das Sägeblatt (5) tragenden Schwenkarm (17) noch einen weiteren, an einer für das Sägeblatt (5) vorgesehenen Schutzhaube (18) angreifenden Hilfsschwenkarm (19) aufweist, der mit dem Schwenkarm (17) ein Parallelogramm aufspannt, und
daß die Stützvorrichtung (12) zwischen dem Schwenkarm (17) und dem Hilfsschwenkarm (19) oder zwischen dem Hilfsschwenkarm (19) und dem Schwenklagerblock (9) angeordnet ist.

8. Sägeeinrichtung nach einem der Ansprüche 1 bis 5,
wobei der Schwehklagerblock (9) um eine zur ersten Schwenkachse (8) senkrechte, parallel zur Werkstückauflagefläche (3) verlaufende zweite Schwenkachse (10) schwenkbar ist und
wobei die Schwenkung des Schwenklagerblockes (9) mit dem Sägeaggregat (4) um die zweite Schwenkachse (10) von der zur Grundplatte (2) senkrechten Mittelebene aus nur nach einer Seite möglich und zur anderen Seite blockiert ist,
dadurch gekennzeichnet,
daß die Stützvorrichtung (12) zwischen dem Sägeaggregat (4) und der Grundplatte (2) bzw. einem daran befestigten Teil angebracht ist und
daß die Stützvorrichtung (12) bei nicht seitlich geneigtem Sägeaggregat (4) von der Grundplatte (2) bzw. dem daran befestigten Teil aus zum Sägeaggregat (4) zur einen Seite hin abfallend verläuft.

9. Sägeeinrichtung nach Anspruch 8, dadurch gekennzeichnet, daß die zweite Schwenkachse (10) lediglich virtuell als Zentrum einer Kulisserführung (11) vorhanden ist.

10. Sägeeinrichtung nach Anspruch 8 oder 9, wobei der maximale Neigungswinkel des Sägeaggregates (4) etwa 45° beträgt, dadurch gekennzeichnet, daß der Neigungswinkel der Stützvorrichtung (12) bei nicht seitlich geneigtem Sägeaggregat (4) etwa 30° beträgt.

11. Sägeeinrichtung nach einem der Ansprüche 1 bis 5 und, insbesondere, einem der Ansprüche 8 bis 10,
wobei an der Grundplatte (2) eine Feststellspindel (28) angebracht ist und
wobei die Feststellspindel (28) ein in dem Schwenklagerblock (9) angeordnetes teilkreisförmiges Langloch (27) durchsetzt und zur Arretierung des Sägeaggregates dient,
dadurch gekennzeichnet,
daß die Stützvorrichtung (12) zwischen dem Sägeaggregat (4) und der Grundplatte (2) bzw. einem daran befestigten Teil angebracht ist,
daß auf der Feststellspindel (28) eine Lagerhülse (29) angebracht ist und
daß das der Grundplatte (2) zugeordnete Ende (13) der Stützvorrichtung (12) an der Lagerhülse (29) angelenkt ist.

## Claims

1. A sawing device having a support stand (1),
having a baseplate (2) which is mounted in the support stand (1) so that it can turn by 180° and which has workpiece support surfaces (3) on both sides,
having a saw unit (4) which is disposed on one side of the baseplate (2) and which comprises a saw blade (5), and
having a supporting device (12), particularly a threaded spindle or a threaded telescopic device,
wherein the baseplate (2) can be set firstly in a cross-cut sawing position and secondly in a bench sawing position which is turned by 180° in relation to the cross-cut sawing position,
wherein the saw unit (4) can swivel in relation to the baseplate (2) about a swivelling axis (8) running parallel to a shaft (6) of the saw blade (5), wherein the swivelling axis (8) is preferably part of a swivel mounting block (9),
wherein in the cross-cut sawing position the saw unit (4) can swivel to and fro between an inoperative position remote from the baseplate (2) and a sawing position near the baseplate (2),
wherein in the bench sawing position the saw unit (4) is swivelled towards the baseplate (2) and passes through the baseplate (2) with its saw blade (5),
wherein in the bench sawing position the supporting device (12) holds the saw unit (4) in the sawing position, but is ineffective in the cross-cut sawing position, and
wherein the supporting device (12) is non-detachably mounted at one end (13) and is mounted fixed in the longitudinal direction,
characterised in that
the supporting device (12) is also non-detachably mounted at its other end (14), and
that the other end (14) of the supporting device (12) is mounted in a connecting block (15) so that it is longitudinally displaceable but can be locked in any position of displacement.

2. A sawing device according to claim 1, characterised in that the connecting block (15) is designed as a sliding guide having transversely disposed spring catches (16) or screw catches.

3. A sawing device according to claim 1 or 2, characterised in that
the end (14) of the supporting device (12) is disposed in the interior of the saw unit (4) in the vicinity of the shaft (6) of the saw blade (5),
that the supporting device (12) extends therefrom in the direction of the swivel mounting block (9) and its end (13) extends beyond the swivel mounting block (9), and
that an operating knob (16'), particularly a turning boss of the threaded spindle, is disposed at the end (13).

4. A sawing device according to any one of claims 1 to 3, characterised in that the connecting block (15) is disposed on the swivel mounting block (9).

5. A sawing device according to any one of claims 1 to 4, characterised in that the supporting device (12) is mounted at one end on the baseplate (2).

6. A sawing device according to any one of claims 1 to 4, characterised in that the supporting device (12) is mounted at one end on the swivel mounting block (9).

7. A sawing device according to any one of claims 1 to 4, characterised in that
in addition to the swivel arm (17) carrying the saw blade (5) the saw unit (4) has a further auxiliary swivel arm (19) which acts on a protective hood (18) provided for the saw blade (5) and which spans a parallelogram with the swivel arm (17), and
that the supporting device (12) is disposed between the swivel arm (17) and the auxiliary swivel arm (19) or between the auxiliary swivel arm (19) and the swivel mounting block (9).

8. A sawing device according to any one of claims 1 to 5,
wherein the swivel mounting block (9) can swivel about a second swivelling axis (10) running perpendicularly to the first swivelling axis (8) and parallel to the workpiece support surface (3), and
wherein swivelling of the swivel mounting block (9) with the saw unit (4) about the second swivelling axis (10) from the central plane perpendicular to the baseplate (2) is only possible towards one side and is blocked on the other side,
characterised in that
the supporting device (12) is mounted between the saw unit (4) and the baseplate (2) or a part fastened thereto, and
that when the saw unit (4) is not inclined laterally the supporting device (12) runs from the baseplate (2) or the part fastened thereto to the saw unit (4) whilst descending towards one side.

9. A sawing device according to claim 8, characterised in that the second swivelling axis (10) merely exists virtually, as the centre of a link guide (11).

10. A sawing device according to claim 8 or 9, wherein the maximum angle of inclination of the saw unit (4) is about 45°, characterised in that when the saw unit (4) is not laterally inclined the angle of inclination of the supporting device (12) is about 30°.

11. A sawing device according to any one of claims 1 to 5, and particularly according to any one of claims 8 to 10,
wherein a locking spindle (28) is attached to the baseplate (2),
wherein the locking spindle (28) passes through a partially circular slot (27) disposed in the swivel mounting block (9) and serves for locking the saw unit,
characterised in that
the supporting device (12) is mounted between the saw unit (4) and the baseplate (2) or a part attached thereto,
that a mounting bush (29) is mounted on the locking spindle (28),
and that the end (13) of the supporting device (12) associated with the baseplate (2) is linked to the mounting bush (29).

## Revendications

1. Mécanisme de sciage comprenant un cadre porteur (1),
une plaque de base (2) montée dans le cadre porteur (1) de façon à pouvoir pivoter de 180° et présentant, de part et d'autre, des surfaces d'appui (3) réservées à la pièce à usiner,
un agrégat de sciage (4) disposé d'un côté de la plaque de base (2) et présentant une lame de scie circulaire (5), et
un dispositif de support (12), en particulier une broche filetée ou un télescope fileté,
dans lequel la plaque de base (2) peut être réglée, d'une part, dans une position correspondant à celle d'une scie oscillatoire et, d'autre part, dans une position correspondant à celle d'une scie à table de menuisier, qui a effectué un renversement de 180° par rapport à la position correspondant à celle d'une scie oscillatoire,
dans lequel l'agrégat de sciage (4) peut pivoter, par rapport à la plaque de base (2), autour d'un axe de pivotement (8) s'étendant parallèlement à un arbre (6) de la lame de scie circulaire (5), dans lequel, de préférence, l'axe de pivotement (8) fait partie d'un palier de pivotement (9),
dans lequel l'agrégat de sciage (4), dans la position correspondant à celle d'une scie oscillatoire, peut pivoter en va-et-vient entre une position de repos éloignée de la plaque de base (2) et une position de sciage proche de la plaque de base (2),
dans lequel l'agrégat de sciage (4), dans la position correspondant à celle d'une scie à table de menuisier, a pivoté contre la plaque de base (1) et traverse la plaque de base (1) avec la lame de scie circulaire (5),
dans lequel le dispositif de support (12), dans la position correspondant à celle d'une scie à table de menuisier, maintient l'agrégat de sciage (4) dans la position de sciage, mais est inactif dans la position correspondant à celle d'une scie oscillatoire, et
dans lequel le dispositif de support (12) est monté de manière inamovible et immobile en direction longitudinale à une extrémité (13),
caractérisé
en ce que le dispositif de support (12) est monté de manière inamovible également à l'autre extrémité (14), et
en ce que l'autre extrémité (14) du dispositif de support (12) est montée de façon à pouvoir effectuer un coulissement longitudinal dans un bloc de raccordement (15) dans lequel il peut toutefois être bloqué dans n'importe quelle position de coulissement.

2. Dispositif de sciage selon la revendication 1, caractérisé en ce que le bloc de raccordement (15) est réalisé en forme de guidage avec un cran d'arrêt à ressort (16) où un cran d'arrêt à vis disposé en position transversale.

3. Mécanisme de sciage selon la revendication 1 ou 2, caractérisé
en ce que l'extrémité (14) du dispositif de support (12) est montée à l'intérieur de l'agrégat de sciage (4) à proximité de l'arbre (6) de la lame de scie circulaire (5),
en ce que le dispositif de support (12) s'étend à partir de là en direction du palier de pivotement (9) et s'étire, avec son extrémité (13), au-delà du palier de pivotement (9), et
en ce que, à l'extrémité (13), est disposée une poignée de manipulation (16'), en particulier une tête rotative de la broche filetée.

4. Mécanisme de sciage selon l'une quelconque des revendications 1 à 3, caractérisé en ce que le bloc de raccordement (15) est disposé contre le palier de pivotement (9).

5. Mécanisme de sciage selon l'une quelconque des revendications 1 à 4, caractérisé en ce que le dispositif de support (12) est monté, à une extrémité, contre la plaque de base (2).

6. Mécanisme de sciage selon l'une quelconque des revendications 1 à 4, caractérisé en ce que le dispositif de support (12) est monté, à une extrémité, contre le palier de pivotement (9).

7. Mécanisme de sciage selon l'une quelconque des revendications 1 à 4, caractérisé
en ce que l'agrégat de sciage (4) présente, en plus d'un bras de pivotement (17) portant la lame de scie circulaire (5), encore un bras de pivotement auxiliaire supplémentaire (19) qui vient saisir un capot de protection prévu pour la lame de scie circulaire (5), qui s'étend en formant un parallélogramme avec le bras de pivotement (17), et
en ce que le dispositif de support (12) est monté entre le bras de pivotement (17) et le bras de pivotement auxiliaire (19) ou bien entre le bras de pivotement auxiliaire (19) et le palier de pivotement (9).

8. Mécanisme de sciage selon l'une quelconque des revendications 1 à 5,
dans lequel le palier de pivotement (9) peut pivoter autour d'un second axe de pivotement (10) perpendiculaire au premier axe de pivotement (8) et s'étendant parallèlement à la surface d'appui (3) réservée à la pièce à usiner, et
dans lequel le pivotement du palier de pivotement (9) avec l'agrégat de sciage (4) est possible autour du second axe de pivotement (10), à partir du plan médian perpendiculaire à la plaque de base (2) seulement d'un seul côté et est bloqué de l'autre côté,
caractérisé
en ce que le dispositif de support (12) est monté entre l'agrégat de sciage (4) et la plaque de base (2), respectivement, un élément qui lui est fixé, et
en ce que le dispositif de support (12), dans le cas où l'agrégat de sciage (4) n'est pas incliné latéralement, s'étend en inclinaison d'un côté, à partir de la plaque de base (2), respectivement de l'élément qui lui est fixé jusqu'à l'agrégat de sciage (4).

9. Mécanisme de sciage selon la revendication 8, caractérisé en ce que le second axe de pivotement (10) est seulement présent virtuellement comme centre d'un guidage à coulisse (11).

10. Mécanisme de sciage selon la revendication 8 ou 9, dans lequel l'angle d'inclinaison maximal de l'agrégat de sciage (4) s'élève à environ 45°, caractérisé en ce que l'angle d'inclinaison du dispositif de support (12), dans le cas où l'agrégat de sciage (4) n'est pas incliné latéralement, s'élève à environ 30°.

11. Mécanisme de sciage selon l'une quelconque des revendications 1 à 5, en particulier une des revendications 8 à 10,
dans lequel une broche de fixation (28) est disposée contre la plaque de base (2) et
dans lequel la broche de fixation (28) traverse un trou oblong (27) de forme partiellement circulaire pratiqué dans le palier de pivotement (9) et sert au blocage de l'agrégat de sciage,
caractérisé
en ce que le dispositif de support (12) est monté entre l'agrégat de sciage (4) et la plaque de base (2), respectivement, un élément qui lui est fixé,
en ce qu'un manchon (29) faisant office de palier est disposé sur la broche de fixation (28), et
en ce que l'extrémité du dispositif de support (12) attribuée à la plaque de base (2) est articulée au manchon (29) faisant office de palier.
